# EUROPEAN PATENT APPLICATION

(11) **EP 4 224 918 A1**
(43) Date of publication of application: **09.08.2023**
(21) Application number: 21874167.6
(22) Date of filing: 31.08.2021
(51) Int. Cl.: H04W 28/00

(54) **DATA TRANSMISSION METHOD AND APPARATUS**

(30) Priority: 30.09.2020 CN 202011066226
(71) Applicant: ZTE Corporation, Shenzhen, Guangdong 518057 (CN)
(72) Inventor: LU, Liuming, Shenzhen, Guangdong 518057 (CN); YUAN, Liquan, Shenzhen, Guangdong 518057 (CN)
(74) Representative: Novagraaf Technologies
(86) International application number: PCT/CN2021/115761
(87) International publication number: WO 2022/068506

(57) **Abstract**

Embodiments of the present disclosure provide a data transmission method and apparatus. The method includes: acquiring network condition information of a part or all of working links of the MLD, wherein the network condition information includes load and/or performance information; determining one or more transmission links from the part or all of working links; and transmitting the network condition information of the part or all of working links on the one or more transmission links. The method can solve the problem in the related art that due to the variability of load or performance statistical information of links, transmitting network condition information of a plurality of links via one link causes a heavy load to communication due to excessive information. By transmitting the network condition information via the one or more determined transmission links, the heavy load to communication caused by excessive information is reduced while ensuring that load and/or performance information related to links is provided for the MLD.

## Description

### Cross-Reference to Related Application

The present disclosure is based on and claims priority to Chinese Patent Application No. CN 202011066226.3 filed on September 30, 2020 and entitled "Data Transmission Method and Apparatus", the disclosure of which is incorporated in the present disclosure by reference in its entirety.

### Technical Field

Embodiments of the present disclosure relate to the field of communications, and in particular, to a data transmission method and apparatus.

### Background

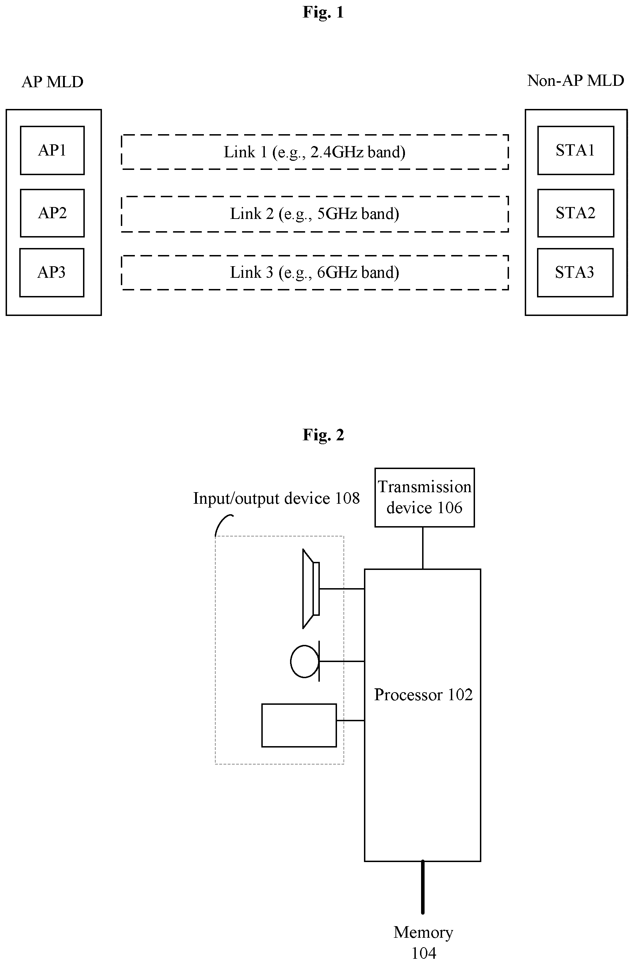

A next-generation Wi-Fi standard (IEEE 802.11be) proposes a flexible Multi-link operation and communication technology, which is generally based on the architecture as shown in Fig. 1. A Multi-Link Device (MLD) has a plurality of Stations (STA) affiliated with the MLD. An MLD of which the affiliated stations are all Access Points (AP) is an AP MLD, and an MLD of which the affiliated stations are all Non-Access Point (Non-AP) stations is a Non-AP Multi-Link Device (Non-AP MLD). In the figure, the STAs in the Non-AP MLD may be respectively associated with corresponding APs in the AP MLD, and each link may have its own corresponding communication channel.

On the one hand, load or performance statistical information of a link may be transmitted via the corresponding communication link. As shown in Fig. 1, link load or performance statistical information of Link1 acquired by AP1 may be directly sent to a relevant station associated with the AP1 via Link1. In addition, besides the corresponding link, the link load or performance statistical information may also be transmitted via other links in the MLD. For example, the link load or performance statistical information of Link1 may also be sent to the MLD on the other side via Link2. Due to the variability of load or performance statistical information of links, that is, statistical data are frequently updated, if load or performance statistical information of a plurality of links is transmitted via one link, the large amount of performance statistical information of links may cause a heavy load to communication due to excessive information.

Aiming at the problem in the related art that due to the variability of load or performance statistical information of links, transmitting network condition information of a plurality of links via one link causes a heavy load to communication due to excessive information, no solution has been proposed yet.

### Summary

Embodiments of the present disclosure provide a data transmission method and apparatus, which may at least solve the problem in the related art that due to the variability of load or performance statistical information of links, transmitting network condition information of a plurality of links via one link causes a heavy load to communication due to excessive information.

According to some embodiments of the present disclosure, provided is a data transmission method, applied to a Multi-Link Device (MLD) and including:
network condition information of a part or all of working links of the MLD is acquired, wherein the network condition information includes load and/or performance information;
one or more transmission links are determined from the part or all of working links; and
the network condition information of the part or all of working links is transmitted on the one or more transmission links.

According to some embodiments of the present disclosure, further provided is a data transmission apparatus, applied to an MLD and including:
an acquisition module, configured to acquire network condition information of a part or all of working links of the MLD, wherein the network condition information includes load and/or performance information;
a determination module, configured to determine one or more transmission links from the part or all of working links; and
a transmission module, configured to transmit the network condition information of the part or all of working links on the one or more transmission links.

According to some embodiments of the present disclosure, further provided is a computer-readable storage medium, the computer-readable storage medium storing a computer program, wherein the computer program is configured to execute, when running, the operations in any one of the method embodiments.

According to some embodiments of the present disclosure, further provided is an electronic apparatus, including a memory and a processor; wherein the memory stores a computer program, and the processor is configured to run the computer program to execute the operations in any one of the method embodiments.

By means of the embodiments of the present disclosure, network condition information of a part or all of working links of an MLD is acquired, wherein the network condition information includes load and/or performance information; one or more transmission links are determined from the part or all of working links; and the network condition information of the part or all of working links is transmitted on the one or more transmission links. The embodiments may solve the problem in the related art that due to the variability of load or performance statistical information of links, transmitting network condition information of a plurality of links via one link causes a heavy load to communication due to excessive information. By transmitting the network condition information via the one or more determined transmission links, the heavy load to communication caused by excessive information is reduced while ensuring that load and/or performance information related to links is provided for the MLD.

### Brief Description of the Drawings

Fig. 1 is a schematic diagram of assemblies related to an SDN controller in the related art;
Fig. 2 is a hardware structural block diagram of a mobile terminal of a data transmission method according to some embodiments of the present disclosure;
Fig. 3 is a flowchart of a data transmission method according to some embodiments of the present disclosure;
Fig. 4 is a schematic diagram of classification and encoding of load or performance information of links of an MLD according to some embodiments of the present disclosure;
Fig. 5 is a schematic diagram I of encoding of load or performance information of links of an MLD according to some embodiments of the present disclosure;
Fig. 6 is a schematic diagram II of encoding of load or performance information of links of an MLD according to some embodiments of the present disclosure;
Fig. 7 is a flowchart of negotiation of transmission capability of load or capability information of links of an MLD according to some embodiments of the present disclosure;
Fig. 8 is a flowchart I of transmission configuration of load or performance information of links of an MLD according to some embodiments of the present disclosure;
Fig. 9 is a flowchart II of transmission configuration of load or performance information of links of an MLD according to some embodiments of the present disclosure; and
Fig. 10 is a block diagram of a data transmission apparatus according to some embodiments of the present disclosure.

### Detailed Description

Hereinafter, embodiments of the present disclosure are described in detail with reference to the accompanying drawings and in conjunction with the embodiments.

It is to be noted that terms "first", "second" and the like in the description, claims and the accompanying drawings of the present disclosure are used for distinguishing similar objects rather than describing a specific sequence or a precedence order.

The method embodiments provided in the embodiments of the present disclosure may be executed in a mobile terminal, a computer terminal or a similar computing apparatus. Taking the method embodiments being executed on a mobile terminal as an example, Fig. 2 is a hardware structural block diagram of a mobile terminal of a data transmission method according to some embodiments of the present disclosure. As shown in Fig. 2, the mobile terminal may include: one or more (Fig. 2 shows only one) processors 102 (the processors 102 may include, but not limited to processing apparatus such as a micro processor (e.g., a Micro-Controller Unit (MCU)) or a programmable logic device (e.g., a Field Programming Gate Array (FPGA)); and a memory 104 for storing data; wherein the mobile terminal may further include a transmission device 106 and an input/output device 108 which are configured to have communication functions. A person of ordinary skill in the art would understand that the structure as shown in Fig. 2 is merely exemplary, and does not limit the structure of the mobile terminal. For example, the mobile terminal may also include more or fewer assemblies than those shown in Fig. 2, or have different configuration from that shown in Fig. 2.

The memory 104 may be used for storing a computer program, for example, a software program and module of application software, such as a computer program corresponding to the data transmission method in the embodiments of the present disclosure. The processor 102 executes various functional applications and data processing by running the computer program stored in the memory 104, i.e., implementing the described method. The memory 104 may include a high-speed random access memory, and may also include a non-transitory memory, such as one or more magnetic storage apparatuses, flash memories or other non-transitory solid-state memories. In some examples, the memory 104 may further include memories remotely arranged with respect to the processors 102, and these remote memories may be connected to the mobile terminal via a network. Examples of the network include, but are not limited to the Internet, an intranet, a local area network, a mobile communication network and combinations thereof.

The transmission device 106 is configured to receive or send data via a network. Specific examples of the network may include a wireless network provided by a communication provider of the mobile terminal. In one example, the transmission device 106 includes a network adapter (Network Interface Controller, NIC) which may be connected to other network devices by means of a base station, thereby being able to communicate with the Internet. In one example, the transmission device 106 may be a Radio Frequency (RF) module which is configured to communicate with the Internet in a wireless manner.

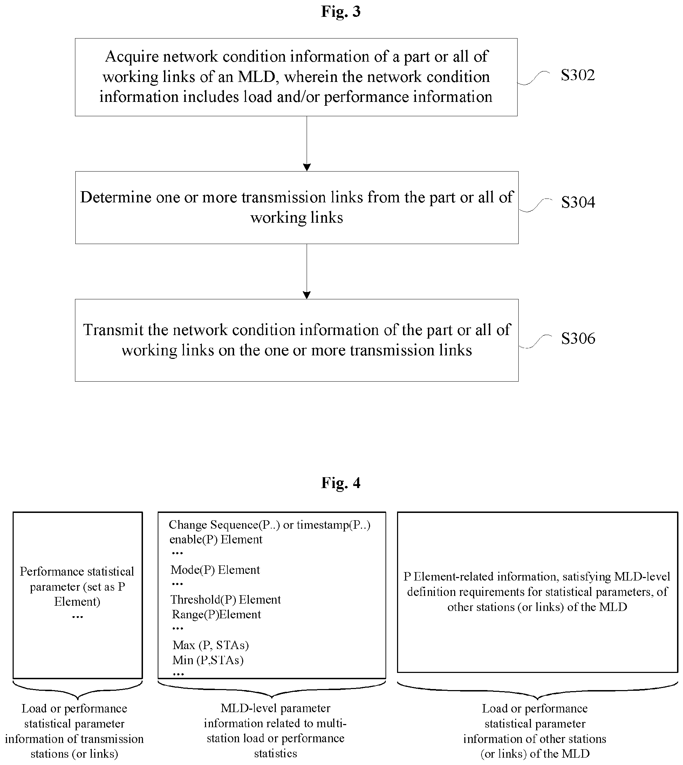

The embodiments of the present disclosure provide a data transmission method running on the mobile terminal or a network architecture. Fig. 3 is a flowchart of a data transmission method according to some embodiments of the present disclosure. As shown in Fig. 3, the method is applied to a Multi-Link Device (MLD), and the flow includes the following operations S302 to S306.

At S302, network condition information of a part or all of working links of the MLD is acquired, wherein the network condition information includes load and/or performance information.

In the embodiments of the present disclosure, the MLD includes an Access Point Multi-Link Device (AP MLD) or a Non-Access Point Multi-Link Device (Non-AP MLD). The part or all of working links (working links herein may also be referred to as links in operation) as described above are links between stations. The embodiments of the present disclosure may also be applicable to a part or all of working stations.

At S304, one or more transmission links are determined from the part or all of working links.

In some embodiments, the operation S304 may include the following operations S3041 and S3042.

At S3041, load and/or performance information sent by one or more stations in an associated device is classified so as to obtain classified data, wherein the classified data includes: load and/or performance information of the one or more transmission links, and/or load and/or performance information of other links except the one or more transmission links.

At S3042, the one or more transmission links are determined from the part or all of working links according to the classified data.

In some embodiments, the operation S3042 may include: for the load and/or performance information of the one or more transmission links, a current link among the part or all of working links is determined as the one or more transmission links; for load and/or performance information of other links except the one or more transmission links, the one or more transmission links are determined from the part or all of working links according to negotiated target multi-link capability and target operation information. Further, in a case where the target multi-link capability of the current link allows transmission of the load and/or performance information of the other links, the current link is determined as the one or more transmission links; and in a case where the target multi-link capability of the current link does not allow the transmission of the load and/or performance information of the other links, and the target multi-link capability of the other links allows the transmission of the load and/or performance information of the other links, one or more working links from the other links are determined as the one or more transmission links.

In the embodiments of the present disclosure, one or more working stations may also be determined from a part or all of working stations, and a determination manner for the one or more working stations is similar to the determination manner of the one or more transmission links, which will be not repeated herein again.

At S306, the network condition information of the part or all of working links is transmitted on the one or more transmission links.

In some embodiments, the operation S306 may include the following operations:
in a case where a communication mode used for the load and/or performance information allowed to be transmitted is a complete communication mode, the load and/or performance information of the part or all of working links is transmitted on the one or more transmission links;
in a case where the communication mode used for the load and/or performance information allowed to be transmitted is a conditional communication mode, and a value range preset for the conditional communication mode is not exceeded or a threshold condition is satisfied, the load and/or performance information of the part or all of working links is transmitted on the one or more transmission links;
in a case where the communication mode used for the load and/or performance information allowed to be transmitted is the conditional communication mode, and a value range preset for the conditional communication mode is not exceeded or a threshold condition is satisfied, the load and/or performance information, which corresponds to parameter types of the load and/or performance information allowed to be transmitted, of the part or all of working links is transmitted on the one or more transmission links.

In some embodiments, the load and/or performance information of the one or more transmission links includes: load and/or performance statistical parameter information of the one or more transmission links, and load and/or performance statistical information of the one or more transmission links.

In some embodiments, the load and/or performance information of the other links except the one or more transmission links includes: at least one piece of information among enablement information, communication mode, threshold and/or value range of MLD-level load and/or performance information of the other links except the one or more transmission links; or MLD-level load and/or performance statistical information among the working links of the MLD or the other links except the one or more transmission links. Further, the load and/or performance information of the other links except the one or more transmission links may further include: parameter information satisfying the MLD-level load and/or performance information of the other links except the one or more transmission links.

In some embodiments, the load or performance statistical information includes at least one of: a BSS Load, information of delay parameters, and throughput information. The delay parameters at least include following types of delay parameters: an access delay of each of a part or all of access categories (ACs), a transmission delay, a BSS internal delay, and a BSS external delay. Further, each of the access delay, the transmission delay, the BSS internal delay, and the BSS external delay at least comprises an average delay, a maximum delay, a minimum delay, a delay of a specific percentile.

In the embodiments of the present disclosure, the network condition information of the part or all of working stations may also be transmitted on one or more transmission stations, and a transmission manner on the one or more transmission stations is similar to the transmission manner on the one or more working links, which will not be repeated herein again.

By means of the operations S302 to S304, the problem in the related art that due to the variability of load or performance statistical information of links, transmitting network condition information of a plurality of links via one link causes a heavy load to communication due to excessive information may be solved. By transmitting the network condition information via the one or more determined transmission links, the heavy load to communication caused by excessive information is reduced while ensuring that load and/or performance information related to links is provided for the MLD.

In some embodiments, before the network condition information of the part or all of working links is transmitted on the one or more transmission links, during a link set up or link operation procedure, the MLD negotiates with the associated device about target multi-link capability and target operation information of the part or all of working links, wherein the target multi-link capability includes whether transmission of load and/or performance information of other links is allowed; the target operation information includes at least one of: parameter types of the load and/or performance information allowed to be transmitted, enablement information of the load and/or performance information allowed to be transmitted, and a communication mode used for the load and/or performance information allowed to be transmitted; and the associated device is a single-link device or an MLD; and the MLD negotiates with the associated device and determines at least one of: whether transmission of the load and/or performance information of the other links is allowed, parameter types of the load and/or performance information allowed to be transmitted, enablement information of the load and/or performance information allowed to be transmitted, and the communication mode used for the load and/or performance information allowed to be transmitted.

Further, the operation of negotiating with the associated device about target multi-link capability and target operation information of the part or all of working links may include:
in a case where the MLD is an AP MLD, multi-link capability and operation information, and/or the network condition information of the part or all of working links are broadcast to a target station in the associated device, wherein the target station is a station affiliated with the associated device; an associating request sent by the target station is received, wherein the associating request is used for indicating an associated station to be associated and capability information of the associated station, and the associating request is further used for indicating at least one of: whether transmission of the load and/or performance information of the other links is allowed, the parameter types of the load and/or performance information allowed to be transmitted, and the communication mode used for the load and/or performance information allowed to be transmitted; an associating response is sent to the target station, and the target multi-link capability and the target operation information of the associated device are determined;
in a case where the MLD is a Non-AP MLD, the associating request is sent to the target station; and the associating response sent by the target station is received, and the target multi-link capability and the target operation information of the associated device are determined.

In the embodiments of the present disclosure, communication is based on link performance statistical information of a multi-link operation, load or performance statistical information of links is first classified and grouped, and then load or performance statistical information of a plurality of links is transmitted on one link differently according to link condition and station requirements of the MLD. For performance statistical parameters of other links except the current link, a sending mechanism upon enablement is adopted, that is, sending is performed only when specified performance statistical parameters of other links are allowed to be sent. For performance statistical parameter information of other links except the current link, a threshold or range is set; when performance statistical parameter values of other links are within the threshold or range, transmission is performed on the transmission links; and when performance statistical parameter values of other links are outside the threshold or range, transmission is not performed on the transmission links. MLD-level multi-station (or link) load or performance statistical parameters are set up, and MLD-level statistical information may be sent to a station first, and is sent only if the station requests specific statistical information.

Fig. 4 is a schematic diagram of classification and encoding of load or performance information of links of an MLD according to some embodiments of the present disclosure. As shown in Fig. 4, the load or performance statistical information of links includes a BSS Load, delay parameter information in an uplink or downlink direction, uplink or downlink throughput information, etc. The types of the delay parameters include access delay of all ACs, an access delay of a specific AC, a transmission delay, a BSS internal delay, and a BSS external delay. Each type of delay parameter may include an average delay, a maximum delay, a minimum delay, a delay of a specific percentile.

The load or performance information of the links of the MLD is mainly divided into load or performance statistical parameter information of transmission stations (or links), MLD-level parameter information related to multi-station (or link) load or performance statistics, and load or performance statistical parameter information of other stations (or links) of the MLD.
1) The load or performance statistical parameter information of transmission stations (or links) includes load performance statistical parameter information of the transmission stations (or links), and carries load or performance statistical information of the transmission stations (or links). The transmission stations (or links) refer to stations or links through which load or performance statistical information of a plurality of stations (or links) of an MLD is currently transmitted. The load or performance statistical parameter information of the transmission links is namely the load or performance statistical information of these stations (or links) themselves, and is compatible with relevant information of conventional single-station devices of EHT (Extremely-High Throughput, i.e., 802.11be), HE (High-Efficient, 802.11ax), HT (High Throughput, i.e., 802.11n) and VHT (Very-High Throughput, i.e., 802.11ac), so that the single-station (or link) device may also receive the relevant information.
2) The MLD-level information includes enablement information, communication mode parameter information, threshold and/or value range information related to the load or performance parameters of other stations (or links) except the transmission stations, and load or performance-related statistical information among current working stations (or links) of the MLD or stations (or links) of the other stations (or links) except the transmission stations.

Enablement information related to load or performance parameters of other stations (or links) except the transmission stations indicates whether to carry related load or performance parameter information of other stations (or links) except the transmission stations, for example, for BSS Load parameter information, enable (BSS Load) = 1 in an MLD level indicates that BSS Load parameter information of other stations (or links) except the transmission stations is carried, and enable (BSS Load) = 0 indicates that no relevant information is carried.

Communication mode parameter information related to load or performance parameters of other stations (or links) except the transmission stations indicates which mode is used to carry the load or performance parameter information. For example, if the communication mode is a "complete communication mode", it indicates that related parameter information of all other stations (or links) except the transmission stations is carried unconditionally; and if the communication mode is a "conditional communication mode", it indicates that the relevant information is carried according to a preset condition, and the relevant information is carried only when the preset condition is satisfied. The conditional communication mode includes a set parameter threshold and/or a set parameter value range. For example, for Access Delay information, a threshold of Access Delay may be set (for example, the threshold may be set to 50 ms). When an Average Access Delay of other stations except the transmission stations is less than or equal to 50 ms, the Access Delay information of the stations is carried; and when an Access Delay of other stations except the transmission station is greater than 50 ms, the Access Delay information of the stations is not carried.

Regarding the load or performance-related statistical information among the current working stations (or links) of the MLD or stations (or links) of other stations (or links) except the transmission stations, for example, with regard to Average Access Delays of respective stations, the maximum value among the Average Access Delays of the respective stations and a station having the maximum value, i.e., Max_Average_Access_Delay_and_STA (STAS), may be calculated; for example, average values of the Average Access Delays of respective stations, i.e., Average_of_Average_Access_Delay (STAS) may also be calculated; moreover, information of stations or links of which the Average Access Delays are shorter than a specific duration may also be calculated.

An update sequence number or timestamp, i.e., Change Sequence (P..) or timestamp (P.) of the load or performance parameter information of links of an MLD is used for synchronizing load or performance parameter information of related links in the MLD. When a plurality of stations (or links) transmit the same link load or performance parameters, which one is the latest updated parameter value is distinguished by using the sequence number or the timestamp. An initial value of the sequence number may be set to zero, and one is added if the load or performance parameters are updated once. The timestamp is timestamp recorded when the link load or performance parameters are updated. The sequence number or timestamp may be configured for one or more parameters, or set for the whole type of load or performance parameters. When configured for one parameter, as long as the value of the parameter changes, the sequence number or timestamp will be correspondingly updated. When configured for multiple parameters or the whole type of load or performance parameters, as long as one parameter therein changes, the sequence number or timestamp will be correspondingly updated.

3) The performance statistical parameter information of other stations (or links) of the MI,D, i.e., parameter information, satisfying definition requirements of MLD-level statistical parameters, of other stations (or links) of the MLD.

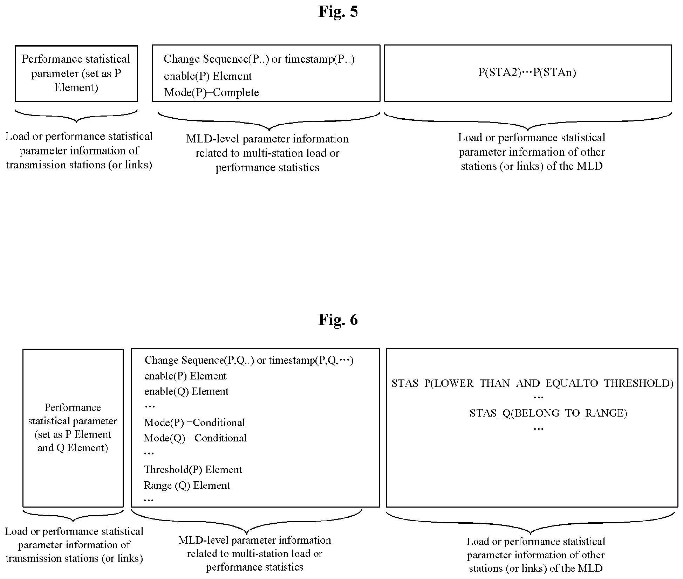

Fig. 5 is a schematic diagram I of encoding of load or performance information of links of an MLD according to some embodiments of the present disclosure. As shown in Fig. 5, the communication mode used for parameter P (also referred to as P element) is a complete mode, then P parameter information of other stations (STA2, ..., STAn) is carried in the load or performance statistical parameter information of other stations (or links) of the MLD. Fig. 6 is a schematic diagram II of encoding of load or performance information of links of an MLD according to some embodiments of the present disclosure. As shown in Fig. 6, a communication mode used for parameters P and Q is a conditional mode, and MLD-level parameter information related to multi-station load or performance statistics specifies a threshold of P and range information of Q, and then P parameter information of related stations complying with limitation of the P threshold, and P parameter information of related stations complying with limitation of the Q range are carried in the load or performance statistical parameter information of the other stations (or links) of the MLD.

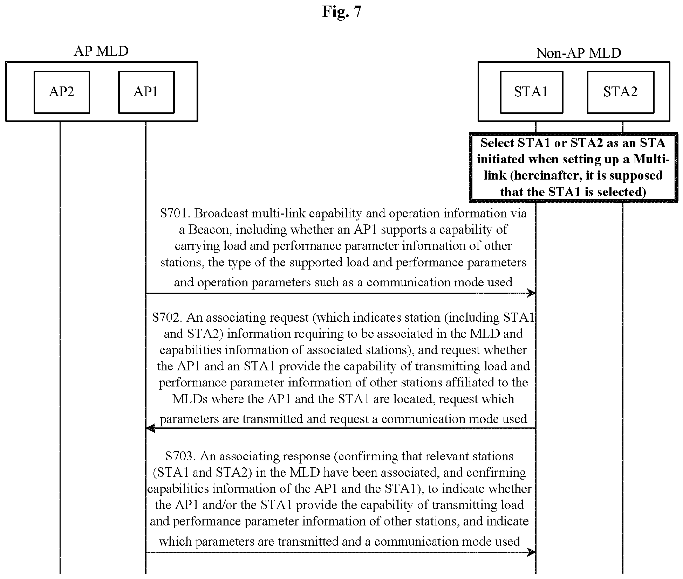

In the set up and association process of multi-link devices, the AP MLD and the Non-AP MLD negotiate and determine whether to carry the capability of the load and performance parameter information of other stations affiliated with the current MLD, and which parameters are transmitted, and negotiate and determine operation parameters such as the communication mode used. Fig. 7 is a flowchart of negotiation of transmission capability of load or capability information of links of an MLD according to some embodiments of the present disclosure. As shown in Fig. 7, the flow includes the following operations S701 to S703.

At S701, an AP MLD broadcasts multi-link capability and operation information via a Beacon, including whether an AP1 supports a capability of carrying load and performance parameter information of other stations, the type of the supported load and performance parameters and operation parameters such as a communication mode used.

At S702, the AP MLD receives an associating request sent by a Non-AP MLD, wherein the associating request indicates information of a station (including STA1 and STA2) requiring to be associated in the MLD and capabilities information of the associated stations, and requests whether the AP1 and an STA1 provide the capability of transmitting load and performance parameter information of stations affiliated with the MLDs where the AP1 and the STA1 are located, requests which parameters (i.e., parameter types allowed to be transmitted) are transmitted and requests a communication mode used.

At S703, the AP MLD sends an associating response to the Non-AP MLD, wherein the associating response is used for confirming that relevant stations (STA1 and STA2) in the MLD have been associated, and confirming capabilities information of the AP1 and the STA1, to indicate whether the AP1 and/or the STA1 provide the capability of transmitting load and performance parameter information of other stations, and the type of the transmitted parameters and a communication mode used.

The AP MLD broadcasts multi-link capability and operation information via a Beacon by using APs (e.g. AP1) affiliated with the AP MLD, the multi-link capability and operation information including whether a capability of carrying load and performance parameter information of other stations is supported, the type of the supported load and performance parameters and operation parameters such as a communication mode used. By means of negotiation between the AP MLD and the Non-AP MLD, whether the AP1 of the AP MLD provides the capability of transmitting load and performance parameter information of other stations affiliated with the AP MLD is determined, and which parameters are transmitted and a communication mode used are determined, and whether the STA1 in the Non-AP MLD provides the capability of reporting the load and performance parameter information of other stations affiliated with the Non-AP MLD is determined, and which parameters are transmitted and a communication mode used are determined. After the set up and association process of the MLDs, APs affiliated with the AP MLD and STAs affiliated with the Non-AP MLD transmit load or performance information of relevant links according to the negotiation result of transmission capabilities of load or performance information of links of the MLDs.

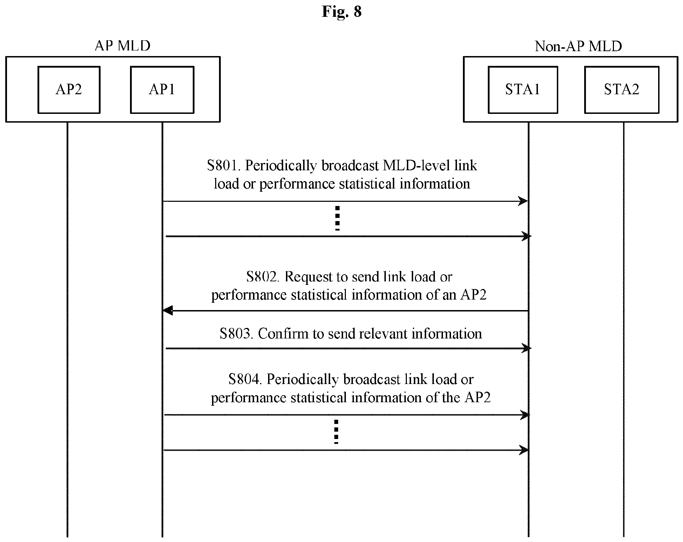

In a communication process, the link load or performance information capability of each AP affiliated with the AP MLD and each STA affiliated with the non-AP MI,D, the supported load and performance parameter type, and the operation parameters such as a communication mode used may also be configured. Fig. 8 is a flowchart I of transmission configuration of load or performance information of links of an MLD according to some embodiments of the present disclosure. As shown in Fig. 8, the flow includes the following operations S801 to S804.

At S801, an AP1 periodically broadcasts MLD-level link load or performance statistical information to an STA1.

At S802, the AP1 request to the STA1 for sending link load information or performance statistical information of an AP2.

At S803, the AP1 confirms to the STA1 for sending relevant information.

At S804, the AP1 periodically broadcasts link load or performance statistical information of the STA2 to the STA1.

The AP1 of the AP MLD may periodically broadcast MLD-level link load or performance statistical information, for example, via a beacon frame (Beacon), in which specific load or performance statistical parameter information of other stations (or links) is not broadcast. The STA1 of the Non-AP MLD requests to send the link load or performance statistical information of the AP2, and the link load or performance statistical information of the AP2 is periodically broadcasted after being confirmed by the AP1 of the AP MLD.

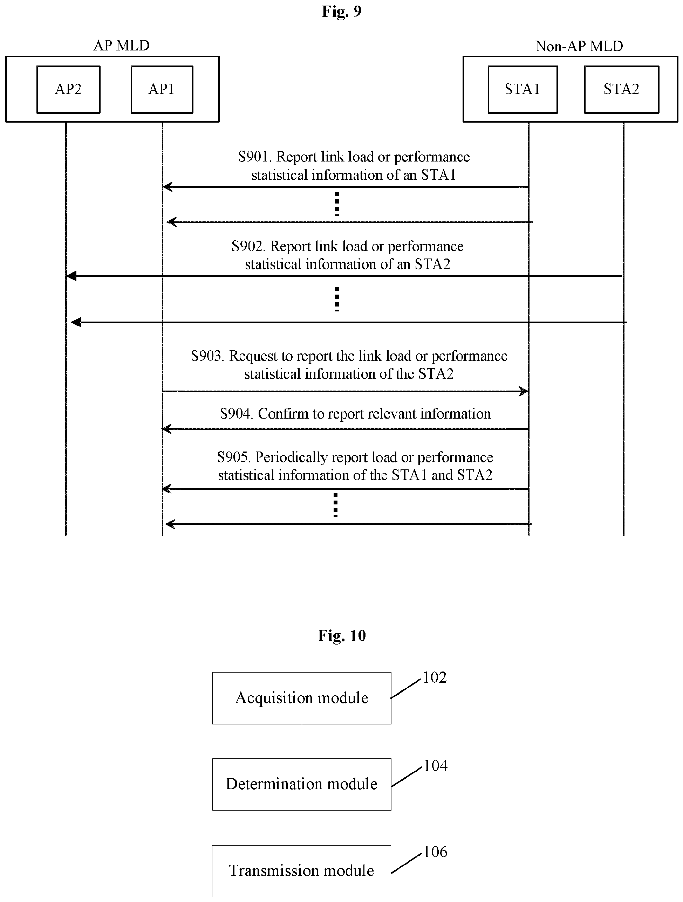

Fig. 9 is a flowchart II of transmission configuration of load or performance information of links of an MLD according to some embodiments of the present disclosure. As shown in Fig. 9, the flow includes the following operations S901 to S905.

At S901, an STA1 reports link load or performance statistical information of the STA1 to an AP 1.

At S902, an STA2 reports link load or performance statistical information of the STA2 to an AP2.

At S903, the AP1 requests to the STA1 for reporting the link load or performance statistical information of the STA2.

At S904, the STA1 confirms to the AP1 for reporting relevant information.

At S905, the STA1 periodically reports load or performance statistical information of the STA1 and STA2 to the AP1.

In an initial phase, the STA1 and STA2 of the Non-AP MLD periodically report the load or performance statistical information of their respective links, respectively; and the AP1 of the AP MLD requests to the STA1 of the Non-AP MLD for reporting the link load or performance statistical information of the STA2, and after being confirmed by the STA1 of the Non-AP MLD, the load or performance statistical information of the STA1 and STA2 are periodically reported by the STA1.

In the embodiments of the present disclosure, communication is based on link performance statistical information of a multi-link operation, load or performance statistical information of links is first classified and encoded, and then load or performance statistical information of a plurality of links is transmitted on one link differently according to link condition and station requirements of the MLD. The heavy load to communication caused by excessive information is reduced while ensuring that performance statistical parameter information related to links is provided for the MLD.

According to some embodiments of the present disclosure, further provided is a data transmission apparatus, applied to a Multi-Link Device (MLD). Fig. 10 is a block diagram of a data transmission apparatus according to some embodiments of the present disclosure. As shown in Fig. 10, the apparatus includes:
an acquisition module 102, configured to acquire network condition information of a part or all of working links of the Multi-Link Device (MLD), wherein the network condition information includes load and/or performance information;
a determination module 104, configured to determine one or more transmission links from the part or all of working links; and
a transmission module 106, configured to transmit the network condition information of the part or all of working links on the one or more transmission links.

In some embodiments, the apparatus may further include:
a first negotiation module, configured to, during a link set up or link operation procedure, negotiate with an associated device about target multi-link capability and target operation information of the part or all of working links, wherein the target multi-link capability includes whether transmission of load and/or performance information of other links is allowed; the target operation information includes at least one of: parameter types of the load and/or performance information allowed to be transmitted, enablement information of the load and/or performance information allowed to be transmitted, and a communication mode used for the load and/or performance information allowed to be transmitted; and the associated device is a single-link device or an MLD; and
a second negotiation module, configured to negotiate with the associated device and determine at least one of: whether transmission of the load and/or performance information of the other links is allowed, parameter types of the load and/or performance information allowed to be transmitted, enablement information of the load and/or performance information allowed to be transmitted, and the communication mode used for the load and/or performance information allowed to be transmitted.

In some embodiments, the first negotiation module includes:
a broadcasting sub-module, configured to, in a case where the MLD is an Access Point Multi-Link Device (AP MLD), broadcast multi-link capability and operation information, and/or the network condition information of the part or all of working links to a target station in the associated device, wherein the target station is a station affiliated with the associated device;
a first determination sub-module, configured to receive an associating request sent by the target station, wherein the associating request is used for indicating an associated station to be associated and capability information of the associated station, and the associating request is further used for indicating at least one of: whether transmission of the load and/or performance information of the other links is allowed, the parameter types of the load and/or performance information allowed to be transmitted, and the communication mode used for the load and/or performance information allowed to be transmitted; and send an associating response to the target station, and determine the target multi-link capability and the target operation information of the associated device;
a sending sub-module, configured to, in a case where the MLD is a Non-Access Point Multi-Link Device (Non-AP MLD), send the associating request to the target station; and
a second determination sub-module, configured to receive the associating response sent by the target station, and determine the target multi-link capability and the target operation information of the associated device.

In some embodiments, the determination sub-module includes:
a first determination unit, configured to determine, for the load and/or performance information of the one or more transmission links, a current link among the part or all of working links as the one or more transmission links; and
a second determination unit, configured to determine, for load and/or performance information of other links except the one or more transmission links, the one or more transmission links from the part or all of working links according to negotiated target multi-link capability and target operation information.

In some embodiments, the second determination unit is further configured to:
in a case where the target multi-link capability of the current link allows transmission of the load and/or performance information of the other links, determine the current link as the one or more transmission links; and
in a case where the target multi-link capability of the current link does not allow the transmission of the load and/or performance information of the other links, and the target multi-link capability of the other links allows the transmission of the load and/or performance information of the other links, determine one or more working links from the other links as the one or more transmission links.

In some embodiments, the transmission module 106 includes:
a first transmission sub-module, configured to, in a case where a communication mode used for the load and/or performance information allowed to be transmitted is a complete communication mode, transmit the load and/or performance information of the part or all of working links on the one or more transmission links;
a second transmission sub-module, configured to, in a case where the communication mode used for the load and/or performance information allowed to be transmitted is a conditional communication mode, and a value range preset for the conditional communication mode is not exceeded or a threshold condition is satisfied, transmit the load and/or performance information of the part or all of working links on the one or more transmission links;
a third transmission sub-module, configured to, in a case where the communication mode used for the load and/or performance information allowed to be transmitted is the conditional communication mode, and a value range preset for the conditional communication mode is not exceeded or a threshold condition is satisfied, transmit the load and/or performance information, which corresponds to parameter types of the load and/or performance information allowed to be transmitted, of the part or all of working links on the one or more transmission links.

In some embodiments, the load and/or performance information of the one or more transmission links includes: load and/or performance statistical parameter information of the one or more transmission links, and load and/or performance statistical information of the one or more transmission links; and
the load and/or performance information of the other links except the one or more transmission links includes: at least one piece of information among enablement information, communication mode, threshold and/or value range of MLD-level load and/or performance information of the other links except the one or more transmission links; or MLD-level load and/or performance statistical information among the working links of the MLD or the other links except the one or more transmission links.

In some embodiments, the load and/or performance information of the other links except the one or more transmission links may further include: parameter information satisfying the MLD-level load and/or performance information of the other links except the one or more transmission links.

In some embodiments, the load or performance statistical information includes at least one of: a BSS Load, information of delay parameters, and throughput information, wherein the delay parameters at least include following types of delay parameters: an access delay of each of a part or all of access categories (ACs), a transmission delay, a BSS internal delay, and a BSS external delay.

In some embodiments, each of the access delay, the transmission delay, the BSS internal delay, and the BSS external delay at least includes an average delay, a maximum delay, a minimum delay, a delay of a specific percentile.

In some embodiments, the Multi-Link Device (MLD) includes an Access Point Multi-Link Device (AP MLD) or a Non-Access Point Multi-Link Device (Non-AP MLD).

It should be noted that the described modules may be implemented by software or hardware. The latter may be implemented in the following manner, but is not limited thereto: all the modules are located in the same processor; or all the modules are located in different processors in any arbitrary combination manner.

Embodiments of the present disclosure further provide a computer-readable storage medium, the computer-readable storage medium stores a computer program, wherein the computer program is configured to execute, when running, the operations in any one of the method embodiments.

In some exemplary embodiments, the computer-readable storage medium may include, but is not limited to: any medium that can store a computer program, such as a USB flash drive, a Read-Only Memory (ROM), a Random Access Memory (RAM), a removable hard disk, a magnetic disk, or an optical disc.

Embodiments of the present disclosure further provide an electronic apparatus, including a memory and a processor; wherein the memory stores a computer program, and the processor is configured to run the computer program to execute the operations in any one of the method embodiments.

In some exemplary embodiments, the electronic apparatus may further include a transmission device and an input/output device, wherein the transmission device is connected to the processor, and the input/output device is connected to the processor.

For specific examples in the embodiments of the present disclosure, reference may be made to the examples described in the embodiments and exemplary embodiments, and thus they will not be repeated again in the embodiments of the present disclosure.

It is apparent that a person skilled in the art shall understand that all of the modules or operations in the present disclosure may be implemented by using a general computing apparatus, may be centralized on a single computing apparatus or may be distributed on a network composed of multiple computing apparatuses. The modules or operations may be implemented by using executable program codes of the computing apparatus, and thus, the program codes may be stored in a storage apparatus and executed by the computing apparatus, and in some cases, the shown or described operations may be executed in a sequence different from that shown herein, or the modules or operations are manufactured into integrated circuit modules, or multiple modules or operations therein are manufactured into a single integrated circuit module for implementation. Thus, the present disclosure is not limited to any specific hardware and software combinations.

The content above merely relates to preferred embodiments of the present disclosure and is not intended to limit some embodiments of the present disclosure. For a person skilled in the art, some embodiments of the present disclosure may have various modifications and variations. Any modifications, equivalent replacements, improvements, etc. made within the spirit and principle of some embodiments of the present disclosure shall all belong to the scope of protection of some embodiments of the present disclosure.

## Claims

1. A data transmission method, applied to a Multi-Link Device, MLD, and comprising:
acquiring network condition information of a part or all of working links of the MLD, wherein the network condition information comprises load and/or performance information;
determining one or more transmission links from the part or all of working links; and
transmitting the network condition information of the part or all of working links on the one or more transmission links.

2. The method according to claim 1, wherein before transmitting the network condition information of the part or all of working links on the one or more transmission links, the method further comprises:
during a link set up or link operation procedure, negotiating with an associated device about target multi-link capability and target operation information of the part or all of working links, wherein the target multi-link capability comprises whether transmission of load and/or performance information of other links is allowed; the target operation information comprises at least one of: parameter types of the load and/or performance information allowed to be transmitted, enablement information of the load and/or performance information allowed to be transmitted, and a communication mode used for the load and/or performance information allowed to be transmitted; and the associated device is a single-link device or an MLD; and
negotiating with the associated device and determining at least one of: whether transmission of the load and/or performance information of the other links is allowed, parameter types of the load and/or performance information allowed to be transmitted, enablement information of the load and/or performance information allowed to be transmitted, and the communication mode used for the load and/or performance information allowed to be transmitted.

3. The method according to claim 2, wherein negotiating with an associated device about target multi-link capability and target operation information of the part or all of working links comprises:
in a case where the MLD is an Access Point Multi-Link Device, AP MLD, broadcasting multi-link capability and operation information, and/or the network condition information of the part or all of working links to a target station in the associated device, wherein the target station is a station affiliated with the associated device;
receiving an associating request sent by the target station, wherein the associating request is used for indicating an associated station to be associated and capability information of the associated station, and the associating request is further used for indicating at least one of: whether transmission of the load and/or performance information of the other links is allowed, the parameter types of the load and/or performance information allowed to be transmitted, and the communication mode used for the load and/or performance information allowed to be transmitted; sending an associating response to the target station, and determining the target multi-link capability and the target operation information of the associated device;
in a case where the MLD is a Non-Access Point Multi-Link Device, Non-AP MLD, sending the associating request to the target station; and
receiving the associating response sent by the target station, and determining the target multi-link capability and the target operation information of the associated device.

4. The method according to claim 1, wherein determining one or more transmission links from the part or all of working links comprises:
for the load and/or performance information of the one or more transmission links, determining a current link among the part or all of working links as the one or more transmission links; and
for load and/or performance information of other links except the one or more transmission links, determining the one or more transmission links from the part or all of working links according to negotiated target multi-link capability and target operation information.

5. The method according to claim 4, wherein determining the one or more transmission links from the part or all of working links according to negotiated target multi-link capability and target operation information comprises:
in a case where the target multi-link capability of the current link allows transmission of the load and/or performance information of the other links, determining the current link as the one or more transmission links; and
in a case where the target multi-link capability of the current link does not allow the transmission of the load and/or performance information of the other links, and the target multi-link capability of the other links allows the transmission of the load and/or performance information of the other links, determining one or more working links from the other links as the one or more transmission links.

6. The method according to claim 5, wherein transmitting the network condition information of the part or all of working links on the one or more transmission links comprises:
in a case where a communication mode used for the load and/or performance information allowed to be transmitted is a complete communication mode, transmitting the load and/or performance information of the part or all of working links on the one or more transmission links;
in a case where the communication mode used for the load and/or performance information allowed to be transmitted is a conditional communication mode, and a value range preset for the conditional communication mode is not exceeded or a threshold condition is satisfied, transmitting the load and/or performance information of the part or all of working links on the one or more transmission links;
in a case where the communication mode used for the load and/or performance information allowed to be transmitted is the conditional communication mode, and a value range preset for the conditional communication mode is not exceeded or a threshold condition is satisfied, transmitting the load and/or performance information, which corresponds to parameter types of the load and/or performance information allowed to be transmitted, of the part or all of working links on the one or more transmission links.

7. The method according to any one of claims 4-6, wherein
the load and/or performance information of the one or more transmission links comprises: load and/or performance statistical parameter information of the one or more transmission links, and load and/or performance statistical information of the one or more transmission links; and
the load and/or performance information of the other links except the one or more transmission links comprises: at least one piece of information among enablement information, communication mode, threshold and/or value range of MLD-level load and/or performance information of the other links except the one or more transmission links; or MLD-level load and/or performance statistical information among the working links of the MLD or the other links except the one or more transmission links.

8. The method according to claim 7, wherein
the load and/or performance information of the other links except the one or more transmission links further comprises: parameter information satisfying the MLD-level load and/or performance information of the other links except the one or more transmission links.

9. The method according to claim 7, wherein the load or performance statistical information comprises at least one of: a Basic Service Set, BSS, Load, information of delay parameters, and throughput information, wherein the delay parameters at least comprise following types of delay parameters: an access delay of each of a part or all of access categories, ACs, a transmission delay, a BSS internal delay, and a BSS external delay.

10. The method according to claim 9, wherein each of the access delay, the transmission delay, the BSS internal delay, and the BSS external delay at least comprises an average delay, a maximum delay, a minimum delay, a delay of a specific percentile.

11. The method according to any one of claims 1-6 and 8-9, wherein the MLD comprises an Access Point Multi-Link Device, AP MLD, or a Non-Access Point Multi-Link Device, Non-AP MLD.

12. A data transmission apparatus, applied to a Multi-Link Device, MLD, and comprising:
an acquisition module, configured to acquire network condition information of a part or all of working links of the MLD, wherein the network condition information comprises load and/or performance information;
a determination module, configured to determine one or more transmission links from the part or all of working links; and
a transmission module, configured to transmit the network condition information of the part or all of working links on the one or more transmission links.

13. A computer-readable storage medium, the computer-readable storage medium storing a computer program, wherein the computer program is configured to execute, when running, the method according to any one of claims 1-11.

14. An electronic apparatus, comprising a memory and a processor; wherein the memory stores a computer program, and the processor is configured to run the computer program so as to execute the method according to any one of claims 1-11.
